# EUROPEAN PATENT APPLICATION

(11) **EP 4 556 976 A1**
(43) Date of publication of application: **21.05.2025**
(21) Application number: 23839659.2
(22) Date of filing: 12.07.2023
(51) Int. Cl.: G02B 6/44

(54) **METHOD AND APPARATUS FOR MANUFACTURING OPTICAL FIBER RIBBON**

(30) Priority: 13.07.2022 JP 2022112370
(71) Applicant: SUMITOMO ELECTRIC INDUSTRIES, LTD., Osaka-shi, Osaka 541-0041 (JP)
(72) Inventor: ISHIKAWA Hiroki, Osaka-shi, Osaka 541-0041 (JP); SAKABE Itaru, Osaka-shi, Osaka 541-0041 (JP); YOSHIKAWA Satoshi, Osaka-shi, Osaka 541-0041 (JP); SATO Fumiaki, Osaka-shi, Osaka 541-0041 (JP); ISHIKAWA Masahiko, Osaka-shi, Osaka 541-0041 (JP); YOSHIZAWA Fumikazu, Osaka-shi, Osaka 541-0041 (JP)
(74) Representative: Müller-Boré & Partner Patentanwälte PartG mbB
(86) International application number: PCT/JP2023/025766
(87) International publication number: WO 2024/014487

(57) **Abstract**

A method for manufacturing an optical fiber ribbon includes: a first coating step of applying a coating resin to a periphery of every two of four or more optical fibers; a first curing step of curing the coating resin to form a sub-ribbon in which the two optical fibers are integrated by the coating resin; a second coating step of intermittently applying a coupling resin between adjacent sub-ribbons among a plurality of the sub-ribbons; and a second curing step of curing the coupling resin to form an optical fiber ribbon in which the plurality of sub-ribbons are intermittently coupled in a longitudinal direction. The optical fibers run downward in the first coating step, the first curing step, the second coating step, and the second curing step, and the steps proceed in order of the first coating step, the first curing step, the second coating step, and the second curing step.

## Description

### TECHNICAL FIELD

The present disclosure relates to a method and an apparatus for manufacturing an optical fiber ribbon.

The present application claims priority based on Japanese Patent Application No. 2022-112370 filed on July 13, 2022, and the entire contents in the Japanese application are incorporated herein.

### BACKGROUND ART

Patent Literature 1 discloses a method for manufacturing an intermittently-coupled type optical fiber ribbon including, in an optical fiber ribbon in which a plurality of optical fibers are continuously coated in a batch manner in a longitudinal direction, inserting intermittent cuts in the longitudinal direction between adjacent optical fibers.

Patent Literature 2 discloses a method for manufacturing an intermittently-coupled type optical fiber ribbon including: a step of arranging a plurality of optical fibers in parallel and integrating every two optical fibers by a resin by bringing the optical fibers into contact with each other, thereby forming a plurality of paired optical fiber ribbons; and a applying step of intermittently applying a coupling resin between the adjacent paired optical fiber ribbons in a longitudinal direction.

### CITATION LIST

### PATENT LITERATURE

Patent Literature 1: JP2012-208310A
Patent Literature 2: WO2018/105424A1

### SUMMARY OF INVENTION

### SOLUTION TO PROBLEM

A method for manufacturing an optical fiber ribbon according to the present disclosure includes:
a first coating step of applying a coating resin to a periphery of every two of four or more optical fibers;
a first curing step of curing the coating resin to form a sub-ribbon in which the two optical fibers are integrated by the coating resin;
a second coating step of intermittently applying a coupling resin between adjacent sub-ribbons among a plurality of the sub-ribbons; and
a second curing step of curing the coupling resin to form an optical fiber ribbon in which the plurality of sub-ribbons are intermittently coupled in a longitudinal direction,
in which the optical fibers run downward in the first coating step, the first curing step, the second coating step, and the second curing step, and the steps proceed in order of the first coating step, the first curing step, the second coating step, and the second curing step.

An apparatus for manufacturing an optical fiber ribbon according to the present disclosure includes:
a first coating device configured to apply a coating resin to a periphery of every two of four or more optical fibers;
a first curing device disposed below the first coating device and configured to cure the coating resin to form a sub-ribbon in which the two optical fibers are integrated by the coating resin;
a second coating device disposed below the first curing device and configured to intermittently apply a coupling resin between adjacent sub-ribbons among a plurality of the sub-ribbons; and
a second curing device disposed below the second coating device and configured to cure the coupling resin to form an optical fiber ribbon in which the plurality of sub-ribbons are intermittently coupled in a longitudinal direction.

### BRIEF DESCRIPTION OF DRAWINGS

[Fig. 1] Fig. 1 is a diagram illustrating a configuration of an apparatus for manufacturing an optical fiber ribbon according to the present embodiment.
[Fig. 2] Fig. 2 is a plan view illustrating a configuration of the optical fiber ribbon.
[Fig. 3] Fig. 3 is a cross-sectional view illustrating a configuration of a cross section taken along a line III-III in Fig. 2 as viewed from a direction indicated by an arrow.
[Fig. 4] Fig. 4 is a cross-sectional view illustrating a configuration of a cross section taken along a line IV-IV in Fig. 2 as viewed from a direction indicated by an arrow.
[Fig. 5] Fig. 5 is a diagram illustrating a configuration of a first guide.
[Fig. 6] Fig. 6 is a diagram illustrating a configuration of the first guide as viewed from above.
[Fig. 7] Fig. 7 is a diagram illustrating configurations of a dispenser and a second guide as viewed from above.
[Fig. 8] Fig. 8 is a diagram illustrating configurations of the dispenser and the second guide.
[Fig. 9] Fig. 9 is a diagram illustrating configurations of the dispenser and the second guide as viewed from a lateral side.
[Fig. 10] Fig. 10 is a diagram illustrating a positional relationship between the dispenser and a plurality of sub-ribbons as viewed from above.
[Fig. 11] Fig. 11 is a cross-sectional view illustrating a configuration of the plurality of sub-ribbons.
[Fig. 12] Fig. 12 is a diagram illustrating another example of the configurations of the dispenser and the second guide as viewed from the lateral side.
[Fig. 13] Fig. 13 is a diagram showing another example of the configurations of the dispenser and the second guide as viewed from above.
[Fig. 14] Fig. 14 is a graph showing an adhesion of a coupling resin.
[Fig. 15] Fig. 15 is a plan view showing another example of the configuration of the optical fiber ribbon.
[Fig. 16] Fig. 16 is a cross-sectional view of a first guide portion of the first guide and the second guide, which is taken along a left-right direction and passes through a center in a front-rear direction.
[Fig. 17] Fig. 17 is a diagram showing a modification of arrangement of the first guide and the second guide.
[Fig. 18] Fig. 18 is a diagram showing an arrangement step between sub-ribbons.
[Fig. 19] Fig. 19 is a diagram showing a modification of configurations of the first guide and the second guide.
[Fig. 20] Fig. 20 is a cross-sectional view of the first guide portion of the first guide and the second guide shown in Fig. 19, which is taken along the left-right direction and passes through the center in the front-rear direction.

### DESCRIPTION OF EMBODIMENTS

### [Technical Problem]

In the method for manufacturing an optical fiber ribbon described in Patent Literature 1, there is a possibility that an optical fiber is damaged when a cut is inserted. In addition, in the method for manufacturing an optical fiber ribbon described in Patent Literature 2, when the time until the coating resin for integrating the optical fibers is cured after being applied is long, the applied coating resin may sag downward. The cross-sectional shape of the thus-obtained optical fiber ribbon becomes a shape in which a part of the coating resin formed on a lower side of the optical fiber is thick.

The present disclosure provides a method and an apparatus for manufacturing an optical fiber ribbon having a good shape.

### [Advantageous Effects of Invention]

According to the present disclosure, a method and an apparatus for manufacturing an optical fiber ribbon having a good shape can be provided.

### [Description of Embodiments of Present Disclosure]

First, an embodiment of the present disclosure will be listed and described.
(1) A method for manufacturing an optical fiber ribbon according to the present disclosure includes:
   a first coating step of applying a coating resin to a periphery of every two of four or more optical fibers;
   a first curing step of curing the coating resin to form a sub-ribbon in which the two optical fibers are integrated by the coating resin;
   a second coating step of intermittently applying a coupling resin between adjacent sub-ribbons among a plurality of the sub-ribbons; and
   a second curing step of curing the coupling resin to form an optical fiber ribbon in which the plurality of sub-ribbons are intermittently coupled in a longitudinal direction,
   in which the optical fibers run downward in the first coating step, the first curing step, the second coating step, and the second curing step, and the steps proceed in order of the first coating step, the first curing step, the second coating step, and the second curing step.

According to such a method, while the coating resin is formed, the optical fibers run downward. Therefore, even if the optical fiber sags down by gravity after the coating resin is applied, the optical fiber sags down in the running direction of the optical fiber. Accordingly, the coating resin having a good shape can be formed at the periphery of the optical fiber, and as a result, the optical fiber ribbon having a good shape can be manufactured.

(2) In the above (1), the method may include: a first guiding step of guiding, before the second coating step, the plurality of sub-ribbons in a state in which the plurality of sub-ribbons are arranged in parallel; and a second guiding step of guiding, during the second coating step, the plurality of sub-ribbons in a state in which the plurality of sub-ribbons are arranged in parallel.

According to such a method, the plurality of sub-ribbons are guided before and during the application of the coupling resin, and therefore, the coupling resin can be applied in a state in which running positions and directions of the plurality of sub-ribbons are aligned. Accordingly, the coupling resin can be more stably applied to an appropriate position.

(3) In the above (2),
a first guide used in the first guiding step and a second guide used in the second guiding step may be configured such that the plurality of sub-ribbons run downward while being curved, and
the plurality of sub-ribbons may be guided while being pressed against the first guide and the second guide.

According to such a method, the coupling resin is applied in a state in which the plurality of sub-ribbons running downward while being curved are pressed against the first guide and the second guide, and therefore, an arrangement step of the plurality of sub-ribbons can be prevented.

(4) In any one of the above (1) to (3),
the coating resin may be an ultraviolet curable resin,
in the first curing step, the ultraviolet curable resin may be set in a state in which the ultraviolet has not been completely cured, and
in the second curing step, the ultraviolet curable resin may be completely cured.

According to such a method, the coupling resin is applied in a state in which the coating resin of the sub-ribbon has not been completely cured, and therefore, the adhesion between the coating resin and the coupling resin is improved. In addition, when the coating resins are sufficiently cured in the second curing step, the coating resins can be prevented from adhering to each other when the optical fiber ribbon is wound.

(5) In any one of the above (1) to (4), the method may further include:
a step of capturing an image of the plurality of sub-ribbons to which the coupling resin is applied in the second coating step; and
a step of determining, based on the captured image of the plurality of sub-ribbons, a position where the coupling resin is applied, and adjusting, based on a determination result, a position where the coupling resin is to be applied in the second coating step.

According to such a method, the position where the coupling resin is to be applied is automatically adjusted based on the position where the coupling resin is applied. Accordingly, a good optical fiber ribbon can be stably manufactured without constant monitoring by an operator.

(6) In any one of the above (1) to (5),
in the second coating step, an ejection time and an ejection interval of the coupling resin may be adjusted in accordance with a running speed of the optical fibers.

According to such a method, the ejection time and the ejection interval of the coupling resin are adjusted in accordance with the running speed of the optical fiber. Accordingly, even when the running speed of the optical fiber varies, a good application length and a good application interval of the coupling resin can be achieved. As a result, the length of the optical fiber ribbon that can be used as a product is increased, and cost reduction can be achieved.

(7) In any one of the above (1) to (6), the method may further include:
a step of marking the optical fiber ribbon after the second curing step.

According to such a method, the manufacturing of the optical fiber ribbon and the formation of the marking are performed in one manufacturing process, and therefore, the cost reduction of the optical fiber ribbon can be achieved.

(8) In any one of the above (1) to (7),
in the second coating step, the coupling resin may be ejected perpendicularly to a surface on which the plurality of sub-ribbons are arranged.

According to such a method, the coupling resin is ejected perpendicularly to the running sub-ribbon, and therefore, it is possible to shorten the time required for the operation of adjusting the ejection position and the ejection angle of the coupling resin, and to achieve cost reduction.

(9) In any one of the above (1) to (7),
in the second coating step, the coupling resin may be ejected obliquely to a surface on which the plurality of sub-ribbons are arranged.

According to such a method, when the coupling resin is ejected obliquely downward with respect to the horizontal direction, the component of the coupling resin in the direction perpendicular to the sub-ribbon is reduced, and therefore, the impact of the collision with the sub-ribbon is alleviated. Accordingly, scattering of the coupling resin is prevented, contamination of optical fiber ribbon manufacturing equipment is prevented, and maintenance is facilitated.

(10) An apparatus for manufacturing an optical fiber ribbon according to the present disclosure includes:
a first coating device configured to apply a coating resin to a periphery of every two of four or more optical fibers;
a first curing device disposed below the first coating device and configured to cure the coating resin to form a sub-ribbon in which the two optical fibers are integrated by the coating resin;
a second coating device disposed below the first curing device and configured to intermittently apply a coupling resin between adjacent sub-ribbons among a plurality of the sub-ribbons; and
a second curing device disposed below the second coating device and configured to cure the coupling resin to form an optical fiber ribbon in which the plurality of sub-ribbons are intermittently coupled in a longitudinal direction.

According to such a configuration, while the coating resin is formed, the optical fibers run downward. Therefore, even if the optical fiber sags down by gravity after the coating resin is applied, the optical fiber sags down in the running direction of the optical fiber. Accordingly, the coating resin having a good shape can be formed at the periphery of the optical fiber, and as a result, the optical fiber ribbon having a good shape can be manufactured.

(11) In the above (10), the apparatus may further include:
a first guide disposed above the second coating device and configured to guide the plurality of sub-ribbons in a state in which the plurality of sub-ribbons are arranged in parallel; and
a second guide disposed in the second coating device and configured to guide the plurality of sub-ribbons in a state in which the plurality of sub-ribbons are arranged in parallel.

According to such a configuration, the plurality of sub-ribbons are guided before and during the application of the coupling resin, and therefore, the coupling resin can be applied in a state in which running positions and directions of the plurality of sub-ribbons are aligned. Accordingly, the coupling resin can be more stably applied to an appropriate position.

(12) In the above (11),
the first guide and the second guide may be configured to allow the plurality of sub-ribbons to run downward while being curved, and
the apparatus for manufacturing the optical fiber may further include a mechanism configured to press the plurality of sub-ribbons against the first guide and the second guide.

According to such a configuration, the coupling resin is applied in a state in which the plurality of sub-ribbons running downward while being curved are pressed against the first guide and the second guide, and therefore, an arrangement step of the plurality of sub-ribbons can be prevented.

(13) In any one of the above (10) to (12), the apparatus may further include:
an image capturing device configured to capture an image of the plurality of sub-ribbons to which the coupling resin is applied; and
a first control device configured to determine, based on the captured image of the plurality of sub-ribbons, a position where the coupling resin is applied, and configured to adjust, based on a determination result, a position where the coupling resin is to be applied by the second coating device.

According to such a configuration, the position where the coupling resin is to be applied is automatically adjusted based on the position where the coupling resin is applied. Accordingly, a good optical fiber ribbon can be stably manufactured without constant monitoring by an operator.

(14) In any one of the above (10) to (13), the apparatus may further include:
a second control device configured to adjust an ejection time and an ejection interval of the coupling resin in the second coating device in accordance with a running speed of the optical fibers.

According to such a configuration, the ejection time and the ejection interval of the coupling resin are adjusted in accordance with the running speed of the optical fiber. Accordingly, even when the running speed of the optical fiber varies, a good application length and a good application interval of the coupling resin can be achieved. As a result, the length of the optical fiber ribbon that can be used as a product is increased, and cost reduction can be achieved.

(15) In any one of the above (10) to (14), the apparatus may further include:
a device disposed below the second curing device and configured to mark the optical fiber ribbon.

According to such a configuration, the manufacturing of the optical fiber ribbon and the formation of the marking are performed in one manufacturing process, and therefore, the cost reduction of the optical fiber ribbon can be achieved.

(16) In any one of the above (10) to (15),
the second coating device may be configured to eject the coupling resin perpendicularly to a surface on which the plurality of sub-ribbons are arranged.

According to such a configuration, the coupling resin is ejected perpendicularly to the running sub-ribbon, and therefore, it is possible to shorten the time required for the operation of adjusting the ejection position and the ejection angle of the coupling resin, and to achieve cost reduction

(17) In any one of the above (10) to (15),
the second coating device may be configured to eject the coupling resin obliquely to a surface on which the plurality of sub-ribbons are arranged.

According to such a configuration, when the coupling resin is ejected obliquely downward with respect to the horizontal direction, the component of the coupling resin in the direction perpendicular to the sub-ribbon is reduced, and therefore, the impact of the collision with the sub-ribbon is alleviated. Accordingly, scattering of the coupling resin is prevented, contamination of optical fiber ribbon manufacturing equipment is prevented, and maintenance is facilitated.

### [Details of Embodiment of Present Disclosure]

Specific examples of a method and an apparatus for manufacturing an optical fiber ribbon according to the present disclosure will be described with reference to the drawings. The present invention is not limited to these exemplifications, but is indicated by the scope of claims, and is intended to include all modifications within a scope and meaning equivalent to the scope of claims.

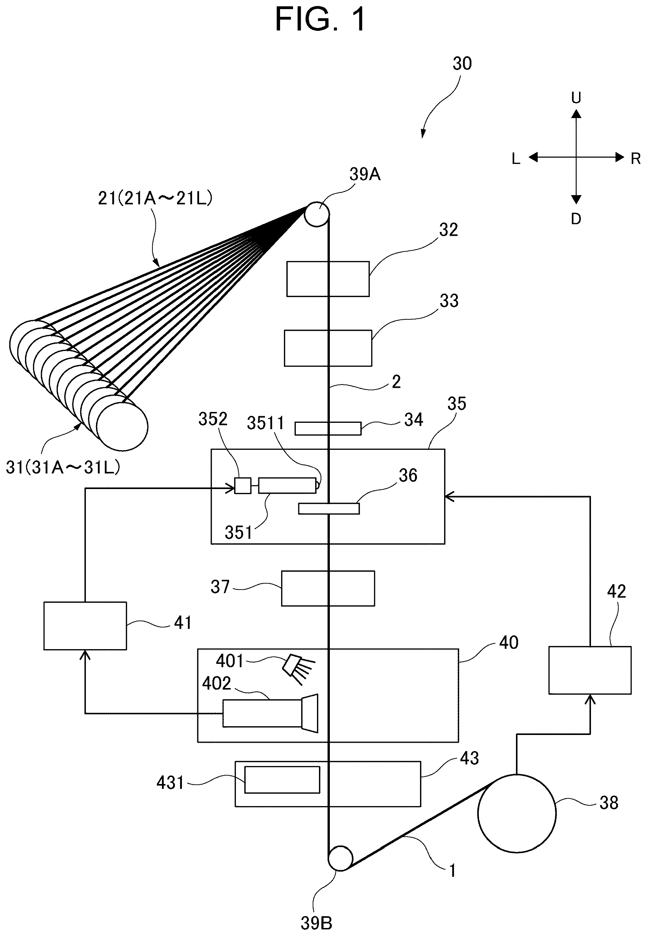

In the drawings, an arrow U indicates an upward direction of an illustrated structure. An arrow D indicates a downward direction of the illustrated structure. An arrow F indicates a forward direction of the illustrated structure. An arrow B indicates a rearward direction of the illustrated structure. An arrow R indicates a rightward direction of the illustrated structure. An arrow L indicates a leftward direction of the illustrated structure. These directions are relative directions set for a manufacturing apparatus 30 for an optical fiber ribbon shown in Fig. 1.

### (Apparatus for Manufacturing Optical Fiber Ribbon)

Fig. 1 is a diagram showing a configuration of the manufacturing apparatus 30 for the optical fiber ribbon 1 according to the present embodiment. The manufacturing apparatus 30 is an apparatus for manufacturing the optical fiber ribbon 1 in which every two optical fibers 21 are intermittently coupled in a longitudinal direction.

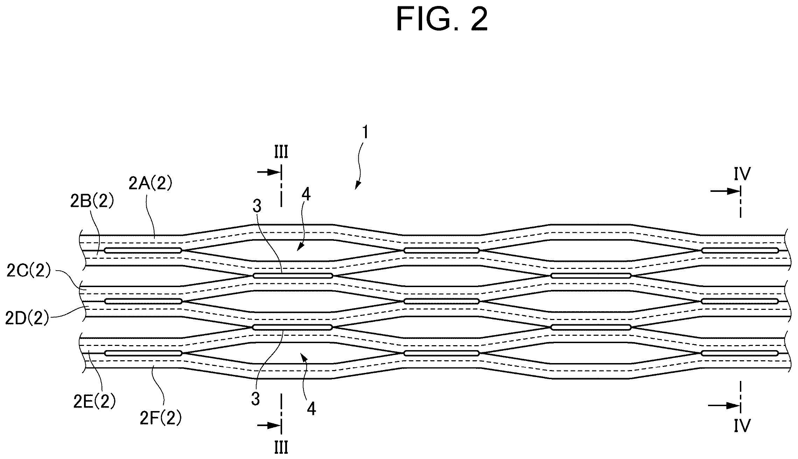

Figs. 2 to 4 show an example of the optical fiber ribbon 1 manufactured by the manufacturing apparatus 30. As illustrated in Fig. 2, the optical fiber ribbon 1 includes a plurality of sub-ribbons 2 (2A, 2B, 2C, 2D, 2E, and 2F) and a coupling resin 3. The plurality of sub-ribbons 2 are arranged in parallel and intermittently coupled to each other in the longitudinal direction by the coupling resin 3. Accordingly, in the optical fiber ribbon 1, a coupling portion in which the adjacent sub-ribbons 2 are coupled to each other by the coupling resin 3 and a non-coupling portion 4 in which the adjacent sub-ribbons 2 are not coupled to each other are intermittently provided in the longitudinal direction. Fig. 2 shows the optical fiber ribbon 1 in a state in which the non-coupling portion 4 is expanded in the arrangement direction of the sub-ribbon 2.

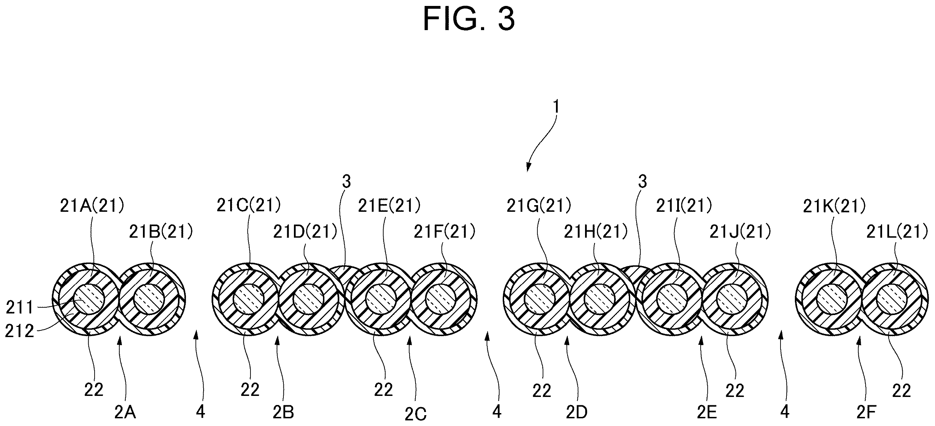

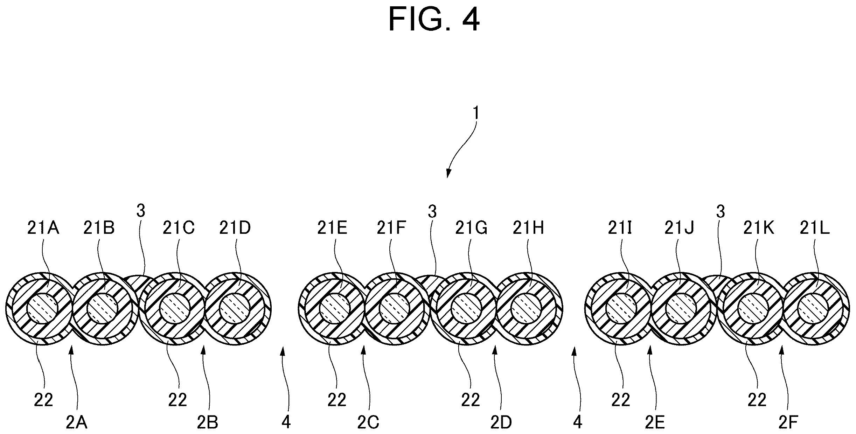

As illustrated in Figs. 3 and 4, each of the plurality of sub-ribbons 2 includes two optical fibers 21 and a coating resin 22. Each of the optical fibers 21 has a glass fiber 211 and a coating layer 212. The glass fiber 211 includes, for example, a core and a cladding. The coating layer 212 is formed of a resin that covers a periphery of the glass fiber 211. The coating layer 212 may include two coating layers instead of one layer, and may further include a colored layer. A periphery of two adjacent optical fibers 21 is coated with the coating resin 22 in the longitudinal direction. The coating resin 22 is formed of a resin material such as an acrylic ultraviolet curable resin or an epoxy ultraviolet curable resin.

In this example, the optical fiber ribbon 1 has 12 optical fibers that are optical fibers 21A to 21L. The optical fibers 21A and 21B, the optical fibers 21C and 21D, the optical fibers 21E and 21F, the optical fibers 21G and 21H, the optical fibers 21I and 21J, and the optical fibers 21K and 21L are integrated by the coating resin 22 in a state in which the respective two optical fibers are continuously in contact with each other in the longitudinal direction, and six sub-ribbons that are sub-ribbons 2A to 2F are formed. Further, the sub-ribbons 2A and 2B, the sub-ribbons 2B and 2C, the sub-ribbons 2C and 2D, the sub-ribbons 2D and 2E, and the sub-ribbons 2E and 2F are intermittently coupled to each other by the coupling resin 3 while being in contact with each other.

The coupling resin 3 is formed of a resin material such as an acrylic ultraviolet curable resin or an epoxy ultraviolet curable resin. The coupling resin 3 may be formed of the same resin material as the coating resin 22.

As illustrated in Fig. 1, the manufacturing apparatus 30 for the optical fiber ribbon 1 includes a supply bobbin 31, a first coating device 32, a first curing device 33, a first guide 34, a second coating device 35, a second guide 36, a second curing device 37, a winding-up bobbin 38, and guide rollers 39A and 39B.

The optical fibers 21 constituting the optical fiber ribbon 1 are wound around the supply bobbins 31. For example, the optical fibers 21A to 21L are formed by a drawing step or the like and are wound around the supply bobbins 31. The optical fibers 21 drawn out from the supply bobbins 31 are fed to the first coating device 32 by the guide roller 39A. In this example, the manufacturing apparatus 30 includes 12 supply bobbins that are supply bobbins 31A to 31L around which 12 optical fibers that are optical fibers 21A to 21L are wound, respectively.

The first coating device 32 applies the coating resin 22 (see Fig. 2) to the periphery of the optical fibers 21 in units of two optical fibers in a plurality of optical fibers 21. For example, a plurality of holes (not illustrated) through which two optical fibers 21 pass are provided in the first coating device 32. The plurality of holes are arranged in parallel at predetermined intervals in a cross section perpendicular to a vertical direction. The first coating device 32 applies the coating resin to a periphery of two optical fibers passing through the respective hole.

The first curing device 33 is disposed below the first coating device 32. The first curing device 33 cures the coating resin 22 applied by the first coating device 32. For example, when the coating resin 22 is an ultraviolet curable resin, an ultraviolet irradiation device is used as the first curing device 33. With the curing of the coating resin 22, the plurality of sub-ribbons 2 in each of which the two optical fibers 21 are integrated by the coating resin 22 are formed.

The first guide 34 is disposed below the first curing device 33 and above the second coating device 35, and guides the plurality of sub-ribbons 2 in a state in which the plurality of sub-ribbons 2 are arranged in parallel. The first guide 34 is disposed, for example, above and close to the second coating device 35. The first guide 34 may be formed of stainless steel or the like.

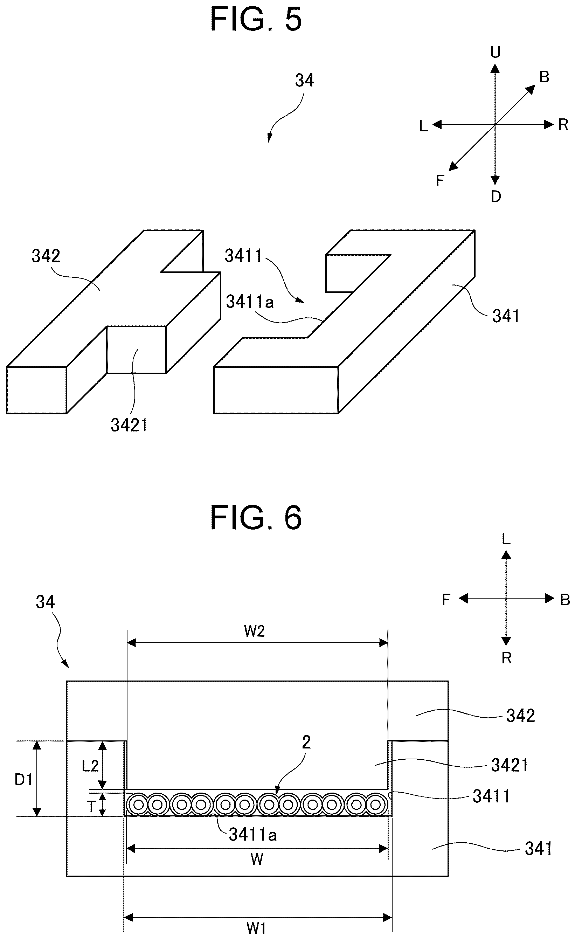

For example, as illustrated in Fig. 5, the first guide 34 includes a first guide member 341 and a second guide member 342. The first guide member 341 has a recessed portion 3411 for accommodating the plurality of sub-ribbons 2. The second guide member 342 has a protruding portion 3421 corresponding to the recessed portion 3411 of the first guide member 341.

As illustrated in Fig. 6, the first guide 34 is disposed so as to sandwich, by the recessed portion 3411 of the first guide member 341 and the protruding portion 3421 of the second guide member 342, the plurality of sub-ribbons 2 from a direction perpendicular to a surface on which the plurality of sub-ribbons 2 are arranged.

The recessed portion 3411 is formed such that a width W1 is larger than a width W of the optical fiber ribbon 1 (that is, a sum of widths of the plurality of sub-ribbons 2 arranged in parallel) and a depth D1 is larger than a thickness T of the optical fiber ribbon 1 (that is, a thickness of the sub-ribbon 2). The protruding portion 3421 is formed such that a width W2 is smaller than the width W1 of the recessed portion 3411, and a length L2 is smaller than a value (D1 - T) obtained by subtracting the thickness T from the depth D1. The configuration of the first guide 34 is not limited to the configurations shown in Figs. 5 and 6.

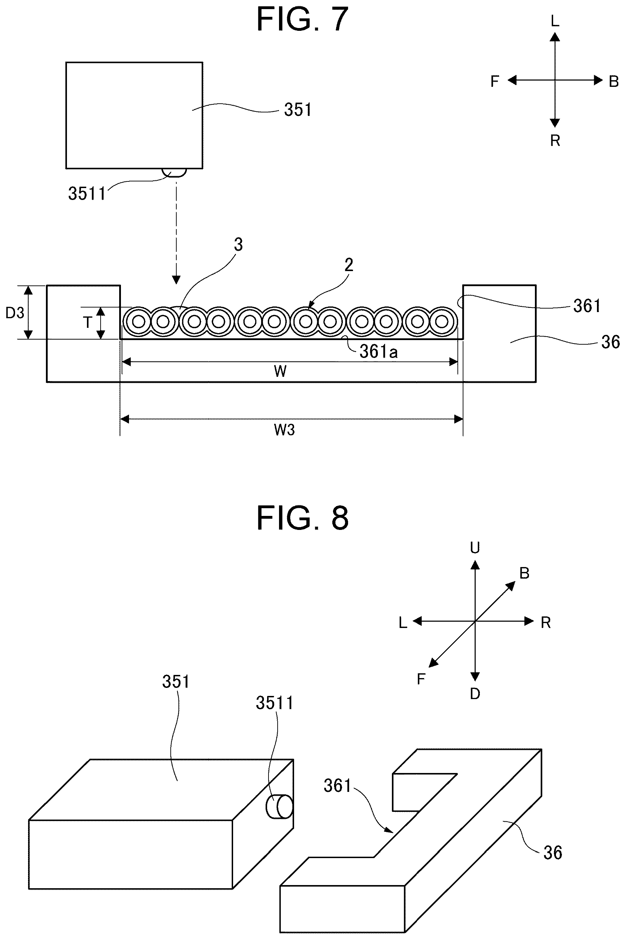

As illustrated in Fig. 1, the second coating device 35 is disposed below the first guide 34. The second coating device 35 intermittently applies the coupling resin 3 (see Fig. 2) between adjacent sub-ribbons 2. For example, the second coating device 35 includes a dispenser 351 for ejecting the coupling resin 3. The dispenser 351 includes an ejection nozzle 3511 from which the coupling resin 3 is ejected. As illustrated in Fig. 7, the ejection nozzle 3511 faces the plurality of sub-ribbons 2 arranged in parallel. The ejection nozzle 3511 ejects the coupling resin 3 between adjacent sub-ribbons 2.

As illustrated in Fig. 1, the second guide 36 is disposed in the second coating device 35, and guides the plurality of sub-ribbons 2 in a state in which the plurality of sub-ribbons 2 are arranged in parallel. The second guide 36 is disposed, for example, below and close to the dispenser 351. The second guide 36 may be formed of stainless steel or the like.

For example, as shown in Figs. 7 and 8, the second guide 36 has a recessed portion 361 for accommodating the plurality of sub-ribbons 2. The second guide 36 is disposed such that the recessed portion 361 opens toward the dispenser 351. In other words, the recessed portion 361 is disposed such that the dispenser 351 faces a surface on which the plurality of sub-ribbons 2 are arranged, and guides the plurality of sub-ribbons 2 on a surface opposite to the surface on which the plurality of sub-ribbons 2 facing the dispenser 351 are arranged. In Fig. 7, a one-dot chain line arrow indicates an ejection direction of the coupling resin 3.

The recessed portion 361 is formed such that a width W3 is larger than a width W of the optical fiber ribbon 1 (that is, a sum of widths of the plurality of sub-ribbons 2 arranged in parallel) and a depth D3 is larger than a thickness T of the optical fiber ribbon 1 (that is, a thickness of the sub-ribbon 2). The configuration of the second guide 36 is not limited to the configurations shown in Figs. 7 and 8.

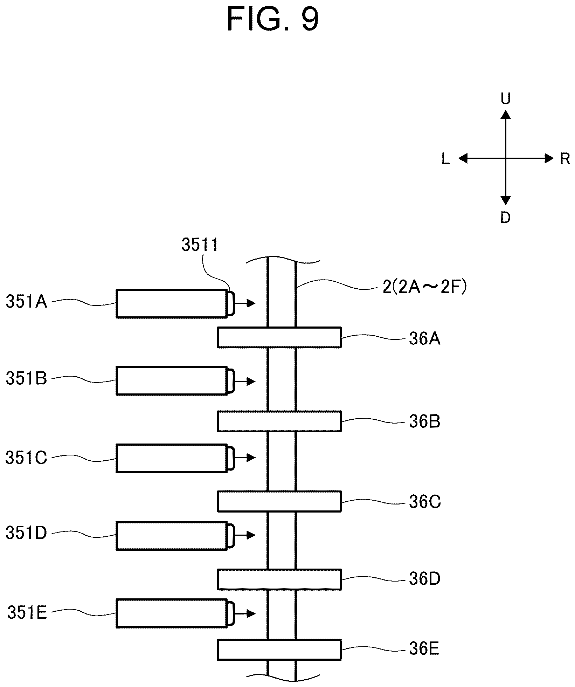

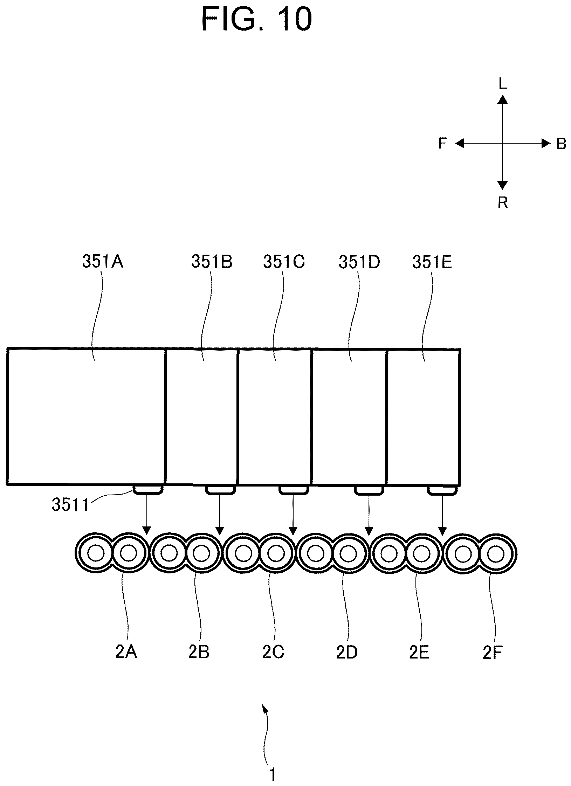

Only one dispenser 351 is shown in Figs. 1, 7, and 8, and the second coating device 35 includes a plurality of dispensers 351 in accordance with the number of sub-ribbons 2. In this example, as illustrated in Figs. 9 and 10, the second coating device 35 includes five dispensers that are dispensers 351A to 351E corresponding to six sub-ribbons that are sub-ribbons 2A to 2F. In Figs. 9 and 10, an arrow extending from an ejection nozzle 3511 of each of the dispensers 351 (351A to 351E) indicates the ejection direction of the coupling resin 3.

As illustrated in Fig. 9, the dispensers 351A to 351E are disposed at intervals along a running direction of the sub-ribbon 2. The order of arrangement of the dispensers 351A to 351E may be different from the order of arrangement shown in Fig. 9.

Each of the dispensers 351A to 351E ejects the coupling resin 3 perpendicularly to the surface on which the plurality of sub-ribbons 2 are arranged. In other words, each of the dispensers 351A to 351E ejects the coupling resin 3 in a horizontal direction to the sub-ribbon 2 running from the upper side to the lower side in the vertical direction.

As illustrated in Fig. 10, the dispenser 351A is disposed at a position facing a gap between the sub-ribbons 2A and 2B, and applies the coupling resin 3 between the sub-ribbons 2A and 2B. The dispenser 351B is disposed at a position facing a gap between the sub-ribbons 2B and 2C, and applies the coupling resin 3 between the sub-ribbons 2B and 2C. The dispenser 351C is disposed at a position facing a gap between the sub-ribbons 2C and 2D, and applies the coupling resin 3 between the sub-ribbons 2C and 2D. The dispenser 351D is disposed at a position facing a gap between the sub-ribbons 2D and 2E, and applies the coupling resin 3 between the sub-ribbons 2D and 2E. The dispenser 351E is disposed at a position facing a gap between the sub-ribbons 2E and 2F, and applies the coupling resin 3 between the sub-ribbons 2E and 2F.

As illustrated in Fig. 9, as the second guides 36, five second guides 36A to 36E may be disposed so as to correspond to the five dispensers that are dispensers 351A to 351E. Specifically, the second guide 36A is disposed below the dispenser 351A. The second guide 36B is disposed below the dispenser 351B. The second guide 36C is disposed below the dispenser 351C. The second guide 36D is disposed below the dispenser 351D. The second guide 36E is disposed below the dispenser 351E. Note that a plurality of second guides 36A to 36E are disposed separately and away from each other, and may be configured integrally by being coupled.

Returning to Fig. 1, the second curing device 37 is disposed below the second coating device 35. The second curing device 37 cures the coupling resin 3. For example, when the coupling resin 3 is an ultraviolet curable resin, an ultraviolet irradiation device is used as the second curing device 37. The optical fiber ribbon 1 in which the plurality of sub-ribbons 2 are intermittently coupled in the longitudinal direction is formed by curing the coupling resin 3.

The winding-up bobbin 38 winds up the optical fiber ribbon 1 conveyed via the guide roller 39B.

### (Method for Manufacturing Optical Fiber Ribbon)

Next, a method for manufacturing the optical fiber ribbon 1 using the manufacturing apparatus 30 will be described.

First, as illustrated in Fig. 1, the optical fibers 21A to 21L are drawn out from the supply bobbins 31A to 31L, respectively, and the drawn-out optical fibers 21A to 21L are conveyed to the first coating device 32 via the guide roller 39A. The plurality of optical fibers 21 pass through the first coating device 32 while running downward, for example, along the vertical direction.

In the first coating device 32, the coating resin 22 is applied to a periphery of respective two adjacent optical fibers 21 in the plurality of optical fibers 21A to 21L (first coating step). For example, 12 optical fibers 21A to 21L are coated with the coating resin 22 while passing through the plurality of holes in the first coating device 32 in a state in which the 2n+1-th optical fiber (n is an integer from 0 to 5) is brought into contact with the 2n+2-th optical fiber and the 2n+2-th optical fiber is separated from the 2n+3-th optical fiber (n is an integer from 0 to 4). Accordingly, the coating resin 22 is applied to each of the peripheries of the 2n+1-th optical fiber (n is an integer from 0 to 5) and the 2n+2-th optical fiber.

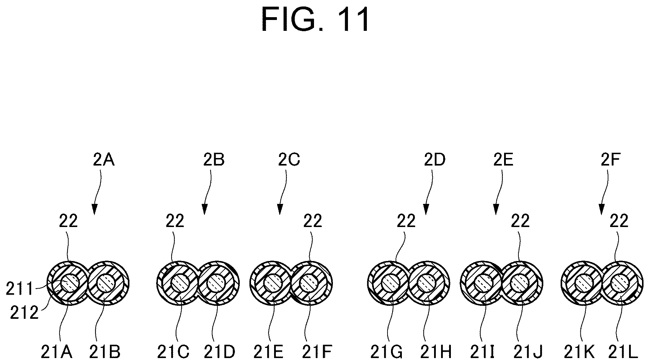

When the plurality of optical fibers 21 coated with the coating resin 22 exit the first coating device 32, the optical fibers 21 enter the first curing device 33 while running downward along the vertical direction. Then, in the first curing device 33, the coating resin 22 applied to the periphery of the optical fiber 21 is cured (first curing step). For example, when the coating resin 22 is an ultraviolet curable resin, the first curing device 33 cures the coating resin 22 by radiating ultraviolet rays to the optical fibers 21A to 21L coated with the coating resin 22. Accordingly, the plurality of sub-ribbons 2 in which the two optical fibers 21 are integrated with the coating resin 22 are formed. In this example, as illustrated in Fig. 11, six sub-ribbons 2A to 2F in which the coating resin 22 is formed on the outer peripheries of the optical fibers 21A and 21B, 21C and 21D, 21E and 21F, 11G and 11H, 11I and 11J, 11K and 11L, respectively, are formed.

Subsequently, as illustrated in Fig. 1, when the plurality of sub-ribbons 2 exit the first curing device 33, the plurality of sub-ribbons 2 are guided by the first guide 34 so as to be arranged in parallel in a direction perpendicular to the vertical direction while running downward along the vertical direction before entering the second coating device 35 (first guiding step). For example, the plurality of sub-ribbons 2 are guided along the bottom surface 3411a of the recessed portion 3411 of the first guide 34 as shown in Fig. 6. Accordingly, the plurality of sub-ribbons 2 are arranged in parallel in a state in which the adjacent sub-ribbons are in contact with each other.

Subsequently, the plurality of sub-ribbons 2 arranged in parallel pass through the second coating device 35 while running downward along the vertical direction. In the second coating device 35, the coupling resin 3 is applied between the adjacent sub-ribbons 2 (second coating step). For example, as illustrated in Fig. 10, five dispensers 351A to 351E apply the coupling resin 3 between the sub-ribbons 2A and 2B, the sub-ribbons 2B and 2C, the sub-ribbons 2C and 2D, the sub-ribbons 2D and 2E, and the sub-ribbons 2E and 2F which are in contact with each other.

Further, the plurality of sub-ribbons 2 running in the second coating device 35 are guided by the second guide 36 so as to be arranged in parallel in the direction perpendicular to the vertical direction while running downward along the vertical direction (second guiding step). For example, as illustrated in Fig. 7, the plurality of sub-ribbons 2 are guided such that the surface opposite to the surface facing the dispensers 351A to 351E is along the bottom surface 361a of the recessed portion 361 of the second guide 36. Accordingly, the plurality of sub-ribbons 2 are arranged in parallel in a state in which the adjacent sub-ribbons are in contact with each other.

Subsequently, when the plurality of sub-ribbons 2 coated with the coupling resin 3 exit the second coating device 35, the plurality of sub-ribbons 2 enter the second curing device 37 while running downward along the vertical direction. Then, in the second curing device 37, the coupling resin 3 applied between the adjacent sub-ribbons 2 is cured (second curing step). For example, when the coupling resin is an ultraviolet curable resin, the second curing device 37 cures the coupling resin 3 by radiating ultraviolet rays to the optical fibers 21A to 21L coated with the coupling resin. Accordingly, the optical fiber ribbon 1, as shown in Figs. 2 to 4, in which the plurality of sub-ribbons 2 are intermittently coupled to each other by the coupling resin 3 in the longitudinal direction is formed. Then, the optical fiber ribbon 1 is wound around the winding-up bobbin 38 via the guide roller 39B.

According to the manufacturing apparatus 30 and the manufacturing method for the optical fiber ribbon 1 according to the present embodiment, the first coating step, the first curing step, the second coating step, and the second curing step are performed while the optical fiber ribbon 21 runs from the upper side to the lower side along the substantially vertical direction. Accordingly, while the coating resin 22 is formed, the optical fiber 21 runs downward. Therefore, even if the optical fiber 21 sags down by gravity after the coating resin 22 is applied, the optical fiber 21 sags down in the running direction of the optical fiber 21. Accordingly, the coating resin 22 having a good shape can be formed at the periphery of the optical fiber 21, and as a result, the optical fiber ribbon 1 having a good shape can be manufactured.

In the present embodiment, the plurality of sub-ribbons 2 are guided by the first guide 34 and the second guide 36 before and during the application of the coupling resin 3. Accordingly, the plurality of sub-ribbons 2 are prevented from rotating or crossing each other. Further, the running positions of the plurality of sub-ribbons 2 are fixed. Therefore, the coupling resin 3 can be applied in a state in which the running positions and the directions of the plurality of sub-ribbons 2 are aligned, and the coupling resin 3 can be stably applied to an appropriate position.

In the present embodiment, the coupling resin 3 is ejected perpendicularly to the surface on which the plurality of sub-ribbons 2 are arranged. When the coupling resin 3 is applied perpendicularly to the running sub-ribbon 2, it is not required to adjust the angle of the ejection nozzle only by adjusting the position of the ejection nozzle 3511 of the dispenser 351. Therefore, the time required for adjusting the ejection position and the ejection angle of the coupling resin 3 can be shortened, and the cost reduction can be achieved.

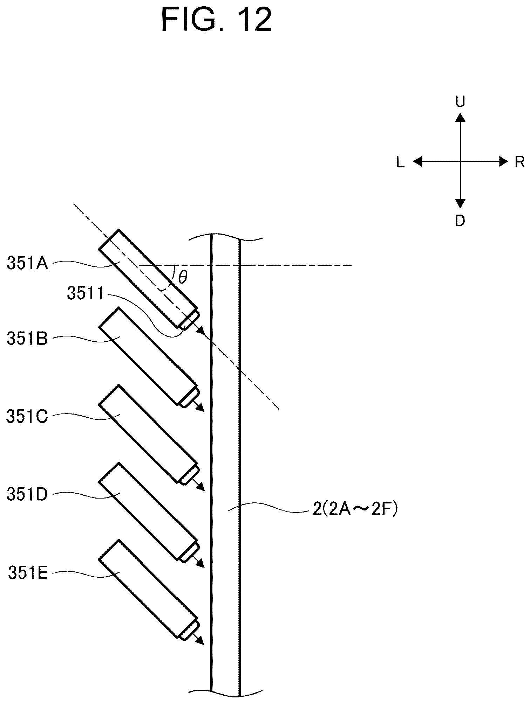

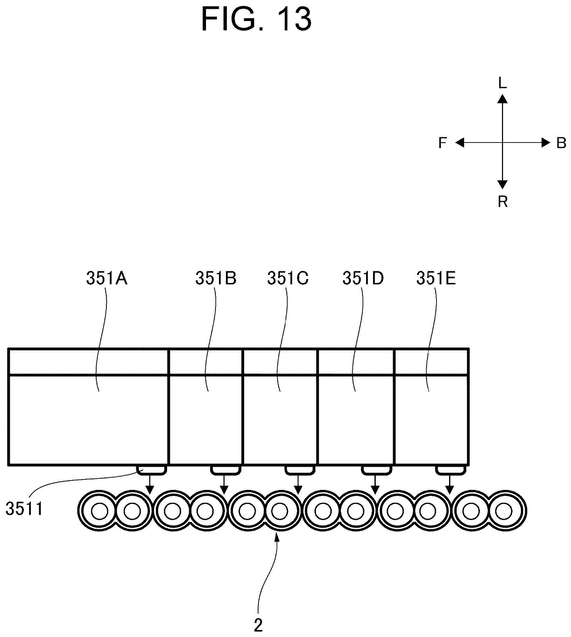

The coupling resin 3 may be ejected obliquely to the surface on which the plurality of sub-ribbons 2 are arranged. Specifically, as illustrated in Figs. 12 and 13, the dispensers 351 of the second coating device 35 may obliquely eject the coupling resin 3 to the surface on which the plurality of sub-ribbons 2 are arranged. For example, the dispensers 351 are disposed such that the ejection nozzle 3511 is inclined downward by a predetermined angle θ with respect to the horizontal direction. As described above, when the coupling resin 3 is ejected obliquely downward with respect to the horizontal direction, the component of the coupling resin 3 in the direction perpendicular to the sub-ribbon 2 is reduced, and therefore, the impact of the collision with the sub-ribbon 2 is alleviated. Accordingly, scattering of the coupling resin 3 is prevented, contamination of optical fiber ribbon manufacturing equipment is prevented, and maintenance is facilitated.

In particular, when the coupling resin 3 is applied by inclining the dispenser 351 downward by 30° or more while setting the horizontal direction to 0°, the component of the ejection speed of the coupling resin 3 in the direction perpendicular to the running direction of the sub-ribbon 2 is reduced, and therefore, the impact of the collision with the sub-ribbon 2 is alleviated, and the scattering of the coupling resin 3 is prevented. Accordingly, contamination of the equipment by the coupling resin 3 is prevented, and maintenance of the equipment is facilitated. On the other hand, when the inclination of the dispenser 351 with respect to the horizontal direction is too large, the distance over which the coupling resin 3 flies is increased, and the application position on the sub-ribbon 2 becomes unstable. Therefore, the inclination angle θ of the dispenser 351 (ejection nozzle 3511) with respect to the horizontal direction is preferably 30° or more and 60° or less.

In the above embodiment, the coating resin 22 is an ultraviolet curable resin, and the coating resin 22 is completely cured in the first curing device 33. However, the coating resin 22 is not completely cured in the first curing device 33 and is in an uncured state, and the coating resin 22 may be completely cured together with the coupling resin 3 in the second curing device 37. According to such a method, the coupling resin 3 is applied in a state in which the coating resin 22 of the sub-ribbon 2 is uncured, and therefore, the adhesion between the coating resin 22 and the coupling resin 3 is improved. In addition, when the coating resins 22 are sufficiently cured in the second curing step, the coating resins 22 can be prevented from adhering to each other when the optical fiber ribbon 1 is wound.

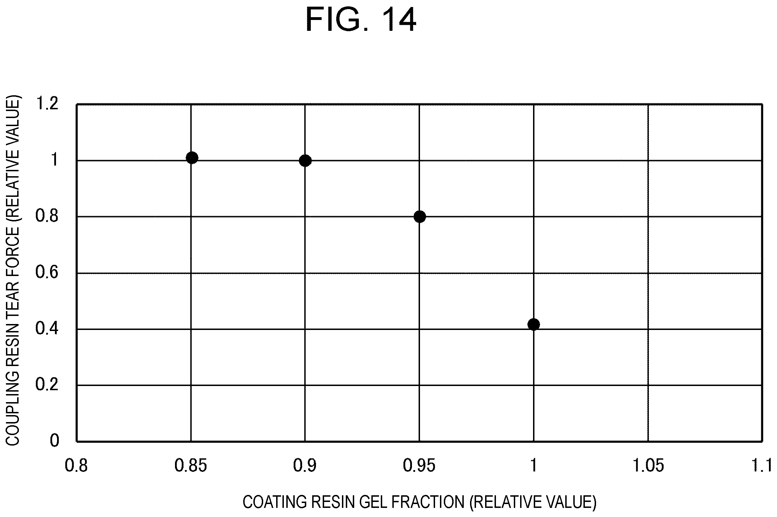

For example, Fig. 14 is a graph showing the adhesion of the coupling resin 3. The horizontal axis indicates the gel fraction of the coating resin 22. The larger the value of the gel fraction is, the more the curing proceeds. The vertical axis indicates the tear force of the coupling resin 3. A larger value of the tear force means that a larger force is required to tear the coupling resin 3 from the sub-ribbon 2. That is, as shown in Fig. 4, it can be seen that the adhesion of the coupling resin 3 is higher when the coupling resin 3 is applied in a state in which the coating resin 22 of the sub-ribbon 2 is uncured.

In the above embodiment, the manufacturing apparatus 30 may further include an image capturing device 40 and a first control device 41 as illustrated in Fig. 1. The image capturing device 40 is disposed, for example, below the second curing device 37. The image capturing device 40 captures an image of the plurality of sub-ribbons 2 coated with the coupling resin 3. For example, the image capturing device 40 includes an illumination unit 401 and a camera 402. The image of the sub-ribbon 2 illuminated by the illumination unit 401 is captured by the camera 402.

The first control device 41 determines, based on the image acquired from the image capturing device 40, a position where the coupling resin 3 is applied, on the sub-ribbon 2, and adjusts, based on the determination result, a position where the coupling resin 3 is to be applied by the second coating device 35. The first control device 41 is, for example, a general-purpose computer including a general-purpose memory and a general-purpose microprocessor that operates in cooperation with the general-purpose memory.

Specifically, the first control device 41 acquires an image signal of the sub-ribbon 2 from the camera 402 and determines the application position of the coupling resin 3. Then, when the first control device 41 determines that it is required to correct the application position of the coupling resin 3, the first control device 41 outputs a control signal to a drive mechanism 352 in the second coating device 35. The drive mechanism 352 moves the dispenser 351 based on the control signal to correct the position where the coupling resin 3 is to be applied.

According to such a configuration, the position where the coupling resin 3 is to be applied is automatically adjusted based on the position where the coupling resin 3 is applied. Accordingly, a good optical fiber ribbon 1 can be stably manufactured without constant monitoring by an operator.

In the above embodiment, the manufacturing apparatus 30 may further include a second control device 42 as illustrated in Fig. 1. The second control device 42 adjusts the ejection time and the ejection interval of the coupling resin 3 in the second coating device 35 in accordance with the running speed of the optical fiber 21. The second control device 42 is, for example, a general-purpose computer including a general-purpose memory and a general-purpose microprocessor that operates in cooperation with the general-purpose memory. The first control device 41 and the second control device 42 may be implemented not by separate control devices but by a single control device.

For example, the second control device 42 acquires winding-up speed information of the optical fiber ribbon 1 from the winding-up bobbin 38. Then, the second control device 42 outputs a control signal for adjusting the ejection time and the ejection interval of the coupling resin 3 of the second coating device 35 to the second coating device 35 in accordance with the winding-up speed of the optical fiber ribbon 1. The second coating device 35 adjusts, based on the control signal, the ejection timing of the coupling resin 3 ejected from the dispenser 351. The winding-up speed of the optical fiber ribbon 1 corresponds to the running speed of the optical fiber 21.

According to such a configuration, the ejection time and the ejection interval of the coupling resin 3 are adjusted in accordance with the running speed of the optical fiber 21. Accordingly, even when the running speed of the optical fiber 21 varies, a good application length and a good application interval of the coupling resin 3 can be achieved. As a result, the length of the optical fiber ribbon 1 that can be used as a product is increased, and cost reduction can be achieved.

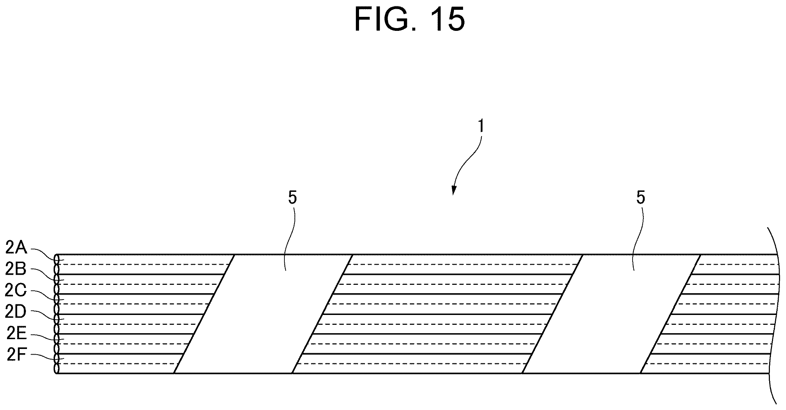

In the above embodiment, the manufacturing apparatus 30 may include a marking device 43 as illustrated in Fig. 1. The marking device 43 is disposed, for example, below the second curing device 37. The marking device 43 marks the optical fiber ribbon 1. The marking device 43 includes, for example, an ink jet printer 431. As illustrated in Fig. 15, an identification mark 5 is printed on the coupling resin 3 or the coating resin 22 of the optical fiber ribbon 1 by the ink jet printer 431.

According to such a configuration, the manufacturing of the optical fiber ribbon 1 and the formation of the marking are performed in one manufacturing process, and therefore, the cost reduction of the optical fiber ribbon 1 can be achieved.

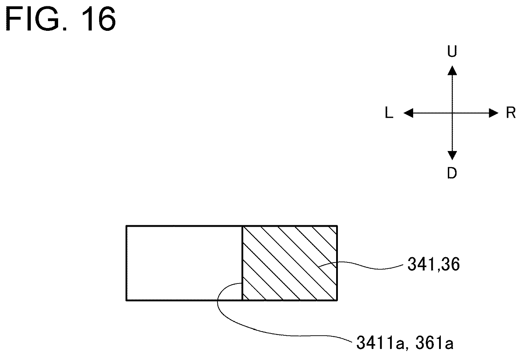

In the above embodiment, the first guide 34 and the second guide 36 are linearly arranged along the vertical direction such that a virtual plane connecting the bottom surface 3411a of the first guide portion 341 of the first guide 34 and the bottom surface 361a of the second guide 36 is along the vertical plane. Specifically, Fig. 16 illustrates a cross-sectional shape passing through a center of the first guide portion 341 of the first guide 34 (or the second guide 36) in the front-rear direction along the left-right direction. As illustrated in Fig. 16, the cross-sectional shape of the bottom surface 3411a of the first guide portion 341 (or the bottom surface 361a of the second guide 36) extends linearly along the vertical direction. The first guide 34 and the second guide 36 are disposed such that a position of the bottom surface 3411a of the first guide portion 341 and a position of the bottom surface 361a of the second guide 36 overlap when viewed from above. Accordingly, the plurality of sub-ribbons 2 running before entering the second coating device 35 and in the second coating device 35 are guided by the first guide 34 and the second guide 36 while running downward along the vertical direction. However, the first guide 34 and the second guide 36 may be configured such that the plurality of sub-ribbons 2 run downward while being curved.

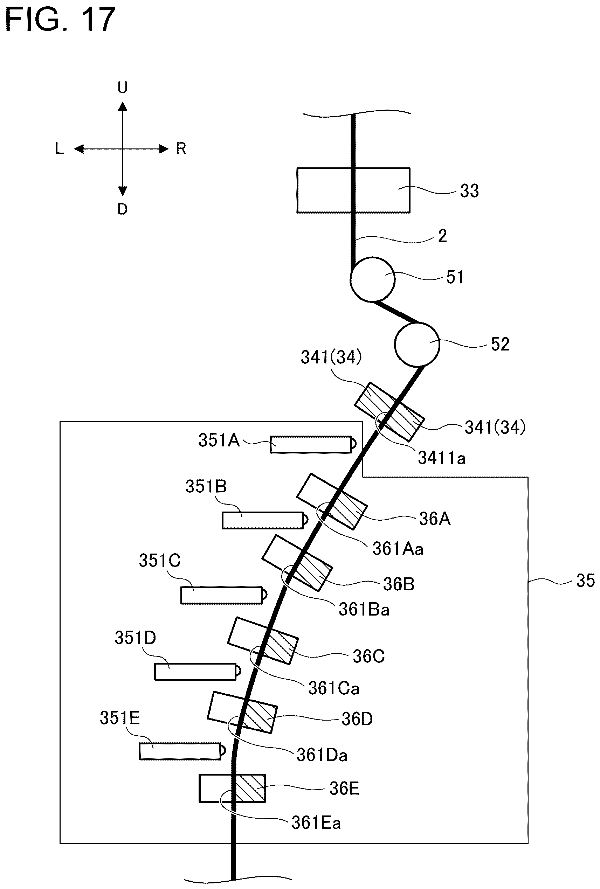

Specifically, Fig. 17 illustrates a modification of the arrangement of the first guide 34 and the second guides 36A to 36E. Note that, in Fig. 17, the first guide 34 and the second guides 36A to 36E are illustrated in cross sections passing through the centers of the first guide 34 and the second guides 36A to 36E in the front-rear direction and extending along the left-right direction.

As illustrated in Fig. 17, the first guide 34 and the second guides 36A to 36E are inclined with respect to the vertical direction such that a virtual plane connecting the bottom surface 3411a of the first guide portion 341 of the first guide 34 and the bottom surfaces 361Aa to 361Ea of the second guides 36A to 36E forms a curve. An inclination angle of each of the first guide 34 and the second guides 36A to 36E is appropriately set in accordance with a position in the up-down direction. The plurality of sub-ribbons 2 running before entering the second coating device 35 and in the second coating device 35 are guided such that surfaces opposite to the surfaces facing the dispensers 351A to 351E are along the bottom surface 3411a of the first guide portion 341 of the first guide 34 and the bottom surfaces 361Aa to 361Ea of the second guides 36A to 36E. That is, the plurality of sub-ribbons 2 are guided to run downward while being curved by the bottom surface 3411a of the first guide portion 341 of the first guide 34 and the bottom surfaces 361Aa to 361Ea of the second guides 36A to 36E.

Also in this example, the plurality of sub-ribbons 2 running before entering the second coating device 35 and in the second coating device 35 are guided by the first guide 34 and the second guides 36A to 36E such that the sub-ribbons 2 are arranged in parallel in a direction perpendicular to the vertical direction while running downward and drawing a curve (first guiding step and second guiding step). Accordingly, the plurality of sub-ribbons 2 are arranged in parallel in a state in which the adjacent sub-ribbons are in contact with each other.

As illustrated in Fig. 17, the manufacturing apparatus 30 may include a mechanism for pressing the plurality of sub-ribbons 2 against the first guide 34 and the second guide 36. In this example, as the mechanism, a guide roller 51 and a guide roller 52 are disposed above the first guide 34. The running direction of the plurality of sub-ribbons 2 is changed so that the plurality of sub-ribbons 2 is pressed against the bottom surface 3411a of the first guide 34 by the guide roller 51 and the guide roller 52.

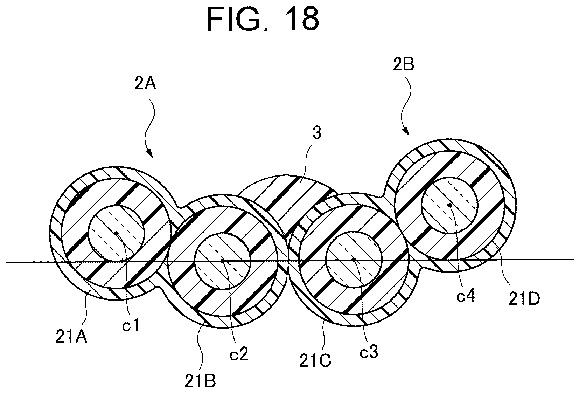

According to such a configuration, the coupling resin 3 is applied in a state in which the plurality of sub-ribbons 2 running downward while being curved are pressed against the first guide 34 and the second guide 36. Therefore, it is possible to prevent an arrangement step in which centers c1 and c2 of the optical fibers 21A and 21B of the sub-ribbon 2A and centers c3 and c4 of the optical fibers 21C and 21D of the sub-ribbon 2B are shifted as illustrated in Fig. 18.

In Fig. 17, when the first guide 34 and the second guides 36A to 36E are inclined with respect to the vertical direction, a virtual plane connecting the bottom surface 3411a and the bottom surfaces 361Aa to 361Ea forms a curve. However, the first guide 34 and the second guides 36A to 36E may be configured such that the bottom surface 3411a and the bottom surfaces 361Aa to 361Ea themselves are curved or inclined.

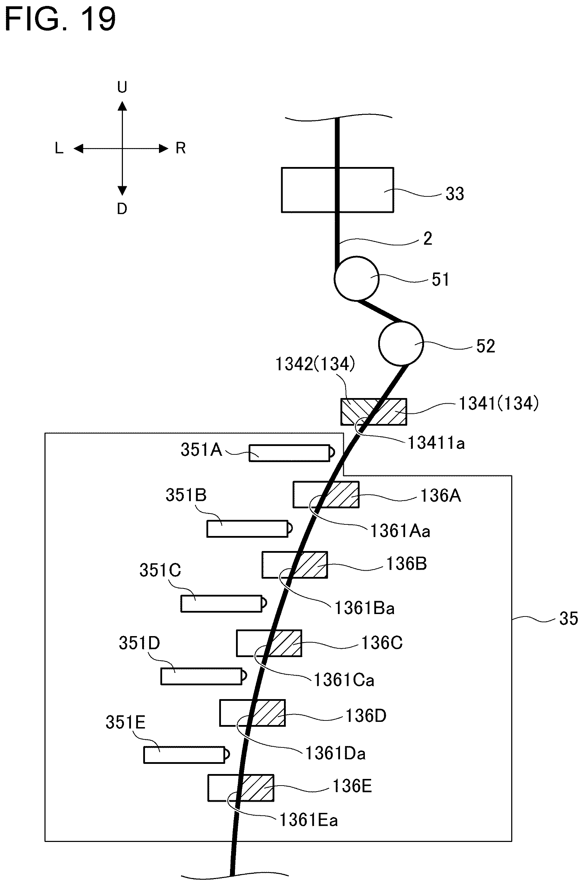

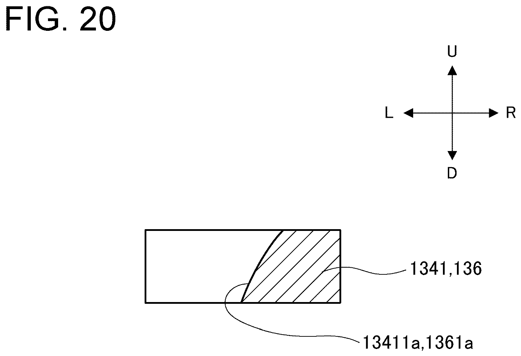

Figs. 19 and 20 show modifications of the configurations of the first guide 34 and the second guides 36A to 36E.

As illustrated in Fig. 20, a first guide portion 1341 of the first guide 134 according to the modification has a curved bottom surface 13411a, and the second guides 136 (136A to 136E) have curved bottom surfaces 1361a (1361Aa to 1361Ea).

As illustrated in Fig. 19, the first guide portion 1341 of the first guide 134 and the second guides 136A to 136E are disposed such that a virtual plane connecting the bottom surface 13411a and the bottom surfaces 1361Aa to 1361Ea forms a curve.

Also in such a configuration, it is possible to cause the plurality of sub-ribbons 2 to run downward while being curved. When the guide rollers 51 and 52 are disposed above the first guide 134, the coupling resin 3 can be applied in a state in which the plurality of sub-ribbons 2 are pressed against the first guide portion 1341 of the first guide 134 and the second guides 136A to 136E, and therefore, an arrangement step between the sub-ribbons 2 can be prevented.

Note that the curvature of curves of the bottom surface 13411a and the bottom surfaces 1361Aa to 1361Ea may be appropriately set in accordance with the position in the up-down direction.

A surface of the first guide portion 134 facing the bottom surface 13411a of the second guide portion 1342 has a shape corresponding to a shape of the bottom surface 13411a.

Further, the first guide portion 1341 of the first guide 134 and the second guides 136A to 136E are separately disposed, and may be integrally configured to have a single curved bottom surface by being connected.

The first guide 134 and the second guides 136A to 136E are not inclined, and the first guide 134 and the second guides 136A to 136E may be inclined with respect to the vertical direction as illustrated in Fig. 17.

Although the present invention is described in detail with reference to specific embodiments, it is apparent to those skilled in the art that various changes and modifications can be made without departing from the spirit and scope of the present invention. In addition, the number, positions, shapes, and the like of members described above are not limited to those in the above-described embodiments, and can be changed to the number, positions, shapes, and the like suitable for carrying out the present invention.

In the above embodiment, the number of the optical fibers 21 constituting the optical fiber ribbon 1 is 12, and the number of the optical fibers 21 is not limited as long as the number is an even number of four or more.

### REFERENCE SIGNS LIST

1: optical fiber ribbon
2, 2A, 2B, 2C, 2D, 2E, 2F: sub-ribbon
21, 21A, 21B, 21C, 21D, 21E, 21F, 21G, 21H, 21I, 21J, 21K, 21L: optical fiber
211: glass fiber
212: coating layer
22: coating resin
3: coupling resin
4: non-coupling portion
5: mark
30: manufacturing apparatus
31, 31A, 31B, 31C, 31D, 31E, 31F, 31G, 31H, 31I, 31J, 31K, and 31L: supply bobbin
32: first coating device
33: first curing device
34: first guide
341: first guide member
3411: recessed portion
3411a: bottom surface
342: second guide member
3421: protruding portion
35: second coating device
351, 351A, 351B, 351C, 351D, 351E: dispenser
3511: ejection nozzle
352: drive mechanism
36, 36A, 36B, 36C, 36D, 36E: second guide
361: recessed portion
361a, 361Aa, 361Ba, 361Ca, 361Da, 361Ea: bottom surface
37: second curing device
38: bobbin
39A: guide roller
39B: guide roller
40: image capturing device
401: illumination unit
402: camera
41: first control device
42: second control device
43: marking device
431: ink jet printer
134: first guide
136A, 136B, 136C, 136D, 136E: second guide
13411a: bottom surface
1361Aa, 1361Ba, 1361Ca, 1361Da, 1361Ea: bottom surface
W: width
W1: width
W2: width
W3: width
θ: angle

## Claims

1. A method for manufacturing an optical fiber ribbon, the method comprising:
a first coating step of applying a coating resin to a periphery of every two of four or more optical fibers;
a first curing step of curing the coating resin to form a sub-ribbon in which the two optical fibers are integrated by the coating resin;
a second coating step of intermittently applying a coupling resin between adjacent sub-ribbons among a plurality of the sub-ribbons; and
a second curing step of curing the coupling resin to form an optical fiber ribbon in which the plurality of sub-ribbons are intermittently coupled in a longitudinal direction,
wherein the optical fibers run downward in the first coating step, the first curing step, the second coating step, and the second curing step, and the steps proceed in order of the first coating step, the first curing step, the second coating step, and the second curing step.

2. The method for manufacturing the optical fiber ribbon according to claim 1, further comprising:
a first guiding step of guiding, before the second coating step, the plurality of sub-ribbons in a state in which the plurality of sub-ribbons are arranged in parallel; and
a second guiding step of guiding, during the second coating step, the plurality of sub-ribbons in a state in which the plurality of sub-ribbons are arranged in parallel.

3. The method for manufacturing the optical fiber ribbon according to claim 2,
wherein a first guide used in the first guiding step and a second guide used in the second guiding step are configured to allow the plurality of sub-ribbons to run downward while being curved, and
wherein the plurality of sub-ribbons are guided while being pressed against the first guide and the second guide.

4. The method for manufacturing the optical fiber ribbon according to claim 1 or 2,
wherein the coating resin is an ultraviolet curable resin,
wherein in the first curing step, the ultraviolet curable resin is set in a state in which the ultraviolet has not been completely cured, and
wherein in the second curing step, the ultraviolet curable resin is completely cured.

5. The method for manufacturing the optical fiber ribbon according to claim 1 or 2, further comprising:
a step of capturing an image of the plurality of sub-ribbons to which the coupling resin is applied in the second coating step; and
a step of determining, based on the captured image of the plurality of sub-ribbons, a position where the coupling resin is applied, and adjusting, based on a determination result, a position where the coupling resin is to be applied in the second coating step.

6. The method for manufacturing the optical fiber ribbon according to claim 1 or 2, wherein in the second coating step, an ejection time and an ejection interval of the coupling resin are adjusted in accordance with a running speed of the optical fibers.

7. The method for manufacturing the optical fiber ribbon according to claim 1 or 2, further comprising a step of marking the optical fiber ribbon after the second curing step.

8. The method for manufacturing the optical fiber ribbon according to claim 1 or 2,
wherein in the second coating step, the coupling resin is ejected perpendicularly to a surface on which the plurality of sub-ribbons are arranged.

9. The method for manufacturing the optical fiber ribbon according to claim 1 or 2,
wherein in the second coating step, the coupling resin is ejected obliquely to a surface on which the plurality of sub-ribbons are arranged.

10. An apparatus for manufacturing an optical fiber ribbon, comprising:
a first coating device configured to apply a coating resin to a periphery of every two of four or more optical fibers;
a first curing device arranged below the first coating device and configured to cure the coating resin to form a sub-ribbon in which the two optical fibers are integrated by the coating resin;
a second coating device disposed below the first curing device and configured to intermittently apply a coupling resin between adjacent sub-ribbons among a plurality of the sub-ribbons; and
a second curing device disposed below the second coating device and configured to cure the coupling resin to form an optical fiber ribbon in which the plurality of sub-ribbons are intermittently coupled in a longitudinal direction.

11. The apparatus for manufacturing the optical fiber ribbon according to claim 10, further comprising:
a first guide disposed above the second coating device and configured to guide the plurality of sub-ribbons in a state in which the plurality of sub-ribbons are arranged in parallel; and
a second guide disposed in the second coating device and configured to guide the plurality of sub-ribbons in a state in which the plurality of sub-ribbons are arranged in parallel.

12. The apparatus for manufacturing the optical fiber ribbon according to claim 11,
wherein the first guide and the second guide are configured to allow the plurality of sub-ribbons to run downward while being curved, and
wherein the apparatus for manufacturing the optical fiber ribbon comprises a mechanism configured to press the plurality of sub-ribbons against the first guide and the second guide.

13. The apparatus for manufacturing the optical fiber ribbon according to claim 10 or 11, further comprising:
an image capturing device configured to capture an image of the plurality of sub-ribbons to which the coupling resin is applied; and
a first control device configured to determine, based on the captured image of the plurality of sub-ribbons, a position where the coupling resin is applied, and configured to adjust, based on a determination result, a position where the coupling resin is to be applied by the second coating device.

14. The apparatus for manufacturing the optical fiber ribbon according to claim 10 or 11, further comprising a second control device configured to adjust an ejection time and an ejection interval of the coupling resin in the second coating device in accordance with a running speed of the optical fibers.

15. The apparatus for manufacturing the optical fiber ribbon according to claim 10 or 11, further comprising a device disposed below the second curing device and configured to mark the optical fiber ribbon.

16. The apparatus for manufacturing the optical fiber ribbon according to claim 10 or 11, wherein the second coating device is configured to eject the coupling resin perpendicularly to a surface on which the plurality of sub-ribbons are arranged.

17. The apparatus for manufacturing the optical fiber ribbon according to claim 10 or 11, wherein the second coating device is configured to eject the coupling resin obliquely to a surface on which the plurality of sub-ribbons are arranged.
